# EUROPEAN PATENT APPLICATION

(11) **EP 4 023 903 A1**
(43) Date of publication of application: **06.07.2022**
(21) Application number: 20859381.4
(22) Date of filing: 27.08.2020
(51) Int. Cl.: F16F 1/38, F16F 13/10, F16F 13/14

(54) **LIQUID SEALING BUSH**

(30) Priority: 27.08.2019 JP 2019154531; 27.08.2019 JP 2019154532; 27.08.2019 JP 2019154537
(71) Applicant: BRIDGESTONE CORPORATION, Chuo-ku Tokyo 104-8340 (JP)
(72) Inventor: HOSODA Masaki, Tokyo 104-8340 (JP); OTSU Kazutaka, Tokyo 104-8340 (JP)
(74) Representative: Oxley, Robin John George
(86) International application number: PCT/JP2020/032320
(87) International publication number: WO 2021/039890

(57) **Abstract**

In a liquid sealing bush, in an outer peripheral surface (13os) of an intermediate tube (13), a main seal protrusion portion (23) extending over an entire length in a circumferential direction and pressed against an inner peripheral surface (11is) of an outer tube (11) is separately provided at each position sandwiching a liquid chamber (15) and an orifice passage (16) from both sides in an axial direction, and in the outer peripheral surface (13os) of the intermediate tube (13), an outer seal protrusion portion (22) extending over the entire length in the circumferential direction and pressed against the inner peripheral surface (11is) of the outer tube (11) is separately provided at each position sandwiched between two main seal protrusion portions (23) in the axial direction and sandwiching the liquid chamber (15) and the orifice passage (16) from both sides in the axial direction, in which, in at least one of two outer seal protrusion portions (22), a recessed portion (24) recessed inward in a radial direction and penetrating in the axial direction is formed in a portion separated from the liquid chamber (15) in the circumferential direction.

## Description

### [Technical Field]

The present invention relates to a liquid sealing bush.

Priority is claimed on Japanese Patent Application No. 2019-154531 filed August 27, 2019, Japanese Patent Application No. 2019-154532 filed August 27, 2019, and Japanese Patent Application No. 2019-154537 filed August 27, 2019, the contents of which are incorporated herein by reference.

### [Background Art]

In the related art, a liquid sealing bush has been known, which includes an outer tube which is attached to any one of a vibration generating portion and a vibration receiving portion, an inner tube which is attached to the other thereof and provided inside the outer tube, an intermediate tube which is provided between the outer tube and the inner tube, and an elastic body which connects an outer peripheral surface of the inner tube and an inner peripheral surface of the intermediate tube, and in which two liquid chambers and an orifice passage configured to allow the liquid chambers to communicate with each other are provided inside the outer tube.

As this type of liquid sealing bush, for example, as shown in Patent Document 1 below, a configuration is known in which a liquid chamber and an orifice passage extend over the entire length in a circumferential direction at each position sandwiched from both sides in an axial direction along a central axis of the liquid sealing bush on an outer peripheral surface of an intermediate tube and two main seal protrusion portions pressed against an inner peripheral surface of an outer tube are provided at intervals in the axial direction, or a configuration is known in which a seal member pressed against an inner peripheral surface of the outer tube is provided.

### [Citation List]

### [Patent Document]

### [Patent Document 1]

Japanese Unexamined Patent Application, First Publication No. H7-269644

### [Summary of Invention]

### [Technical Problem]

In the liquid sealing bush of the conventional art, when a liquid is injected into two liquid chambers and an orifice passage, air remains between the two main seal protrusion portions adjacent to each other in an axial direction, and this air may be included in the liquid.

In the liquid sealing bush of the conventional art, when an outer tube and an intermediate tube are not positioned coaxially before the intermediate tube is fitted into the outer tube, an excessively large load may be applied to, for example, a part of the seal member at the time of this fitting.

In the liquid sealing bush of the conventional art, when vibration is input, a liquid leaks from one liquid chamber, and this liquid enters the other liquid chamber without passing through the orifice passage, and thus, it may not be possible to achieve desired anti-vibration performance.

The present invention is made in view of the above-mentioned circumstances, and an object thereof is to provide a liquid sealing bush capable of preventing air from remaining and being contained in a liquid when the liquid is injected into two liquid chambers and an orifice passage.

The present invention is made in view of the above-mentioned circumstances, and an object thereof is to provide a liquid sealing bush in which an intermediate tube can be easily fitted into an outer tube.

The present invention is made in view of the above-mentioned circumstances, and an object thereof is to provide a liquid sealing bush capable of preventing a liquid from entering the other liquid chamber even when the liquid leaks from one liquid chamber at the time of inputting vibration.

### [Solution to Problem]

According to a first aspect of the present invention, there is provided a liquid sealing bush including: an outer tube attached to any one of a vibration generating portion and a vibration receiving portion; an inner tube attached to the other of the vibration generating portion and the vibration receiving portion and provided inside the outer tube; an intermediate tube provided between the outer tube and the inner tube; and an elastic body configured to connect an outer peripheral surface of the inner tube and an inner peripheral surface of the intermediate tube, in which two liquid chambers and an orifice passage configured to allow the liquid chambers to communicate with each other are provided inside the outer tube, in an outer peripheral surface of the intermediate tube, a main seal protrusion portion extending over an entire length in a circumferential direction and pressed against an inner peripheral surface of the outer tube is separately provided at each position sandwiching the liquid chamber and the orifice passage from both sides in an axial direction along a central axis of the liquid sealing bush, and in the outer peripheral surface of the intermediate tube, an outer seal protrusion portion extending over the entire length in the circumferential direction and pressed against the inner peripheral surface of the outer tube is separately provided at each position sandwiched between two main seal protrusion portions in the axial direction and sandwiching the liquid chamber and the orifice passage from both sides in the axial direction, and in at least one of two outer seal protrusion portions, a recessed portion recessed inward in a radial direction and penetrating in the axial direction is formed in a portion separated from the liquid chamber in the circumferential direction.

### [Advantageous Effects of Invention]

According to the present invention, when a liquid is injected into two liquid chambers and an orifice passage, it is possible to prevent air from remaining and being contained in a liquid.

According to the present invention, an intermediate tube can be easily fitted into an outer tube.

According to the present invention, even when a liquid leaks from one liquid chamber at the time of inputting vibration, it is possible to prevent the liquid from entering the other liquid chamber.

### [Brief Description of Drawings]

Fig. 1 is a cross-sectional view of a liquid sealing bush according to an embodiment of the present invention at a central portion in an axial direction.
Fig. 2 is a cross-sectional view taken along line II-II showing a portion where first and second vertical seal protrusion portions and a positioning protrusion portion are located in Fig. 1.
Fig. 3 is a view when a portion located between liquid chambers adjacent to each other in a circumferential direction in a state where an outer tube is removed from the liquid sealing bush of Fig. 1 and 2 is viewed from the outside in a radial direction.
Fig. 4 is a view when an intermediate portion of an intermediate tube located between two through holes is viewed from the outside in the radial direction.
Fig. 5 is a vertical cross-sectional view showing a portion of Fig. 3 in which the first and second vertical seal protrusion portions and the positioning protrusion portion are avoided.
Fig. 6 is a cross-sectional view taken along line VI-VI of Fig. 3.

### [Description of Embodiments]

Hereinafter, a liquid sealing bush according to an embodiment of the present invention will be described with reference to the drawings.

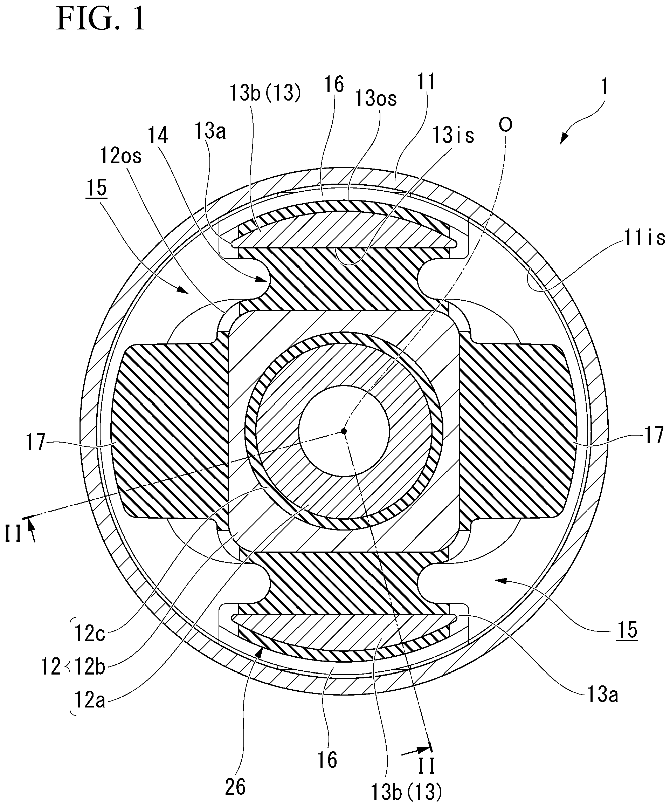

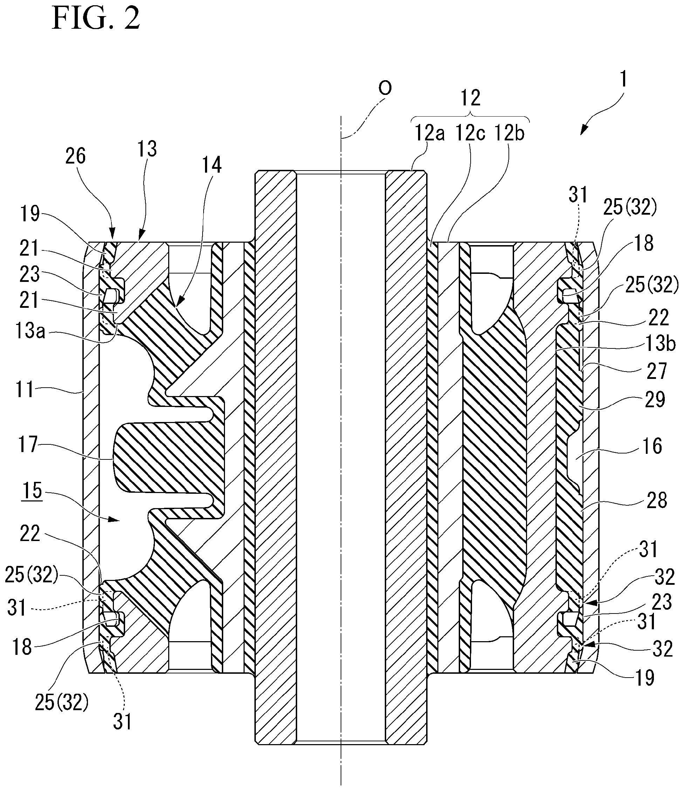

As shown in Figs. 1 and 2, a liquid sealing bush 1 includes an outer tube 11 which is attached to any one of a vibration generating portion and a vibration receiving portion, an inner tube 12 which is attached to the other of the vibration generating portion and the vibration receiving portion and provided inside the outer tube 11, an intermediate tube 13 which is provided between the outer tube 11 and the inner tube 12, and an elastic body 14 which connects an outer peripheral surface 12os of the inner tube 12 and an inner peripheral surface 13is of the intermediate tube 13 to each other, in which two liquid chambers 15 and an orifice passage 16 configured to allow the liquid chambers 15 to communicate with each other are provided inside the outer tube 11.

In the shown example, two orifice passages 16 are provided. Here, for example, a liquid such as ethylene glycol, water, or silicone oil is sealed inside the liquid chambers 15 and the orifice passages 16. The number of orifice passages 16 may be one. For example, the liquid is injected into the liquid chamber 15 and the orifice passage 16 by allowing the liquid chamber 15 and the orifice passage 16 to communicate with a sealed tank storing a liquid in a state where the liquid chamber 15 and the orifice passage 16 are decompressed.

The outer tube 11, the inner tube 12, and the intermediate tube 13 are disposed coaxially with a common axis (central axis) O. Hereinafter, a direction along the common axis O is referred to as an axial direction, a direction intersecting the common axis O when viewed from the axial direction is referred to as a radial direction, and a direction orbiting around the common axis O is referred to as a circumferential direction. In the axial direction, a central side of the liquid sealing bush 1 is referred to as an inside, and a side away from the central portion of the liquid sealing bush 1 is referred to as an outside.

The central portions of the outer tube 11, the inner tube 12, the intermediate tube 13, the elastic body 14, the liquid chamber 15, and the orifice passage 16 in the axial direction coincide with each other.

The inner tube 12 includes a first tubular body 12a, a second tubular body 12b which surrounds the first tubular body 12a from the outside in the radial direction, and a connecting rubber 12c which connects an outer peripheral surface of the first tubular body 12a and an inner peripheral surface of the second tubular body 12b to each other. Each of the first tubular body 12a and the second tubular body 12b is formed in a tubular shape. When viewed from the axial direction, each of the inner and outer peripheral surfaces of the first tubular body 12a and the inner peripheral surface of the second tubular body 12b has a circular shape, and the outer peripheral surface of the second tubular body 12b has a quadrangular shape. For example, the second tubular body 12b is made of a synthetic resin material or the like. The inner tube 12 may not have the connecting rubber 12c.

For example, the intermediate tube 13 is made of a synthetic resin material. The intermediate tube 13 is fitted into the outer tube 11. Two through holes 13a are formed in the intermediate tube 13 at intervals in the circumferential direction, and the through holes 13a face each other in the radial direction. The through holes 13a are formed in the entire axial direction in a portion of the intermediate tube 13 located inside in the axial direction from both end portions in the axial direction. A coated rubber 26 is provided on the outer peripheral surface 13os of the intermediate tube 13. The coated rubber 26 is integrally formed with the elastic body 14. The orifice passages 16 are separately provided between the outer peripheral surface of each portion of the intermediate tube 13 located between the through holes 13a adjacent to each other in the circumferential direction and the inner peripheral surface 11is of the outer tube 11.

Hereinafter, the portion of the intermediate tube 13 located between the through holes 13a adjacent to each other in the circumferential direction is referred to as an intermediate portion 13b of the intermediate tube 13.

At least a part of the inner surface of each of the liquid chamber 15 and the orifice passage 16 is defined by a rubber material. An axial size of the liquid chamber 15 is larger than an axial size of the orifice passage 16, and the orifice passage 16 opens at a central portion of the liquid chamber 15 in the axial direction. The orifice passage 16 is a groove portion which is formed on the outer peripheral surface of the coated rubber 26 and extends in the circumferential direction, and is separately provided on the outer peripheral surface of each intermediate portion 13b of the intermediate tube 13.

The elastic body 14 is made of a rubber material. The elastic body 14 is connected to the inner peripheral surface of the intermediate portion 13b and an opening peripheral edge portion of the through hole 13a on the inner peripheral surface 13is of the intermediate tube 13, and thus, the liquid chamber 15 is defined inside the through hole 13a. The elastic body 14 is connected over the entire periphery of the opening peripheral edge portion of the through hole 13a on the inner peripheral surface 13is of the intermediate tube 13. In the elastic body 14, at least a portion connected to the opening peripheral edge portion of the through hole 13a on the inner peripheral surface 13is of the intermediate tube 13 defines a part of the inner surface of the liquid chamber 15.

The liquid chamber 15 is provided with a stopper protrusion portion 17 which protrudes outward in the radial direction and can abut on the inner peripheral surface 11is of the outer tube 11. The stopper protrusion portion 17 protrudes outward in the radial direction from the outer peripheral surface of the second tubular body 12b of the inner tube 12. The stopper protrusion portion 17 is disposed at a central portion in the axial direction in each of the inner tube 12 and the liquid chamber 15. In the stopper protrusion portion 17, at least an outer end portion in the radial direction is formed of an elastic material. In the shown example, the entire stopper protrusion portion 17 is made of a rubber material. The stopper protrusion portion 17 is integrally formed with the elastic body 14. A radial gap is provided between a radially outer end portion of the stopper protrusion portion 17 and the inner peripheral surface 11is of the outer tube 11.

In the intermediate tube 13, an annular protrusion portion 21 which protrudes outward in the radial direction and extends continuously over the entire periphery is formed at both end portions in the axial direction located outside the liquid chamber 15 and the orifice passage 16 in the axial direction. A plurality of annular protrusion portions 21 are formed at intervals in the axial direction at both end portions of the intermediate tube 13 in the axial direction. The radial outer end portions of the plurality of annular protrusion portions 21 are located at equivalent positions in the radial direction. The plurality of annular protrusion portions 21 are fitted into the outer tube 11.

In the shown example, two annular protrusion portions 21 are formed at intervals in the axial direction at both end portions of the intermediate tube 13 in the axial direction. The annular protrusion portion 21 is located inside the intermediate tube 13 in the axial direction with respect to an outer end opening edge in the axial direction. In the outer peripheral surface 13os of the intermediate tube 13, a portion located outside the annular protrusion portion 21 in the axial direction extends inward in the radial direction outward in the axial direction. In both end portions of the intermediate tube 13 in the axial direction, both end portions of the outer tube 11 in the axial direction are separately crimped and fixed to portions located outside the annular protrusion portion 21 in the axial direction.

The coated rubber 26 straddles the outer peripheral surfaces of the plurality of annular protrusion portions 21 in the axial direction, and is provided over the entire axial direction on the outer peripheral surface 13os of the intermediate tube 13. The inner peripheral surface 11is of the outer tube 11 is pressed against the outer peripheral surface of the annular protrusion portion 21 via the coated rubber 26.

In the outer peripheral surface 13os of the intermediate tube 13, the main seal protrusion portion 23 which extends over the entire length in the circumferential direction and is pressed against the inner peripheral surface 11is of the outer tube 11 is separately provided at each position sandwiching the liquid chamber 15 and the orifice passage 16 from both sides in the axial direction. The main seal protrusion portion 23 is provided between two annular protrusion portions 21 adjacent to each other in the axial direction. The main seal protrusion portion 23 is made of a rubber material and is tilted inward in the axial direction. The main seal protrusion portion 23 is integrally formed with the coated rubber 26.

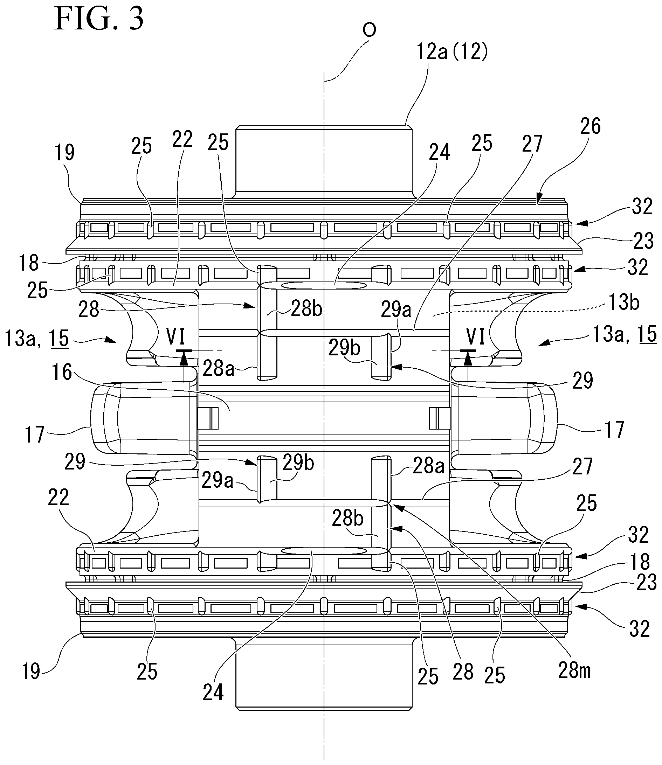

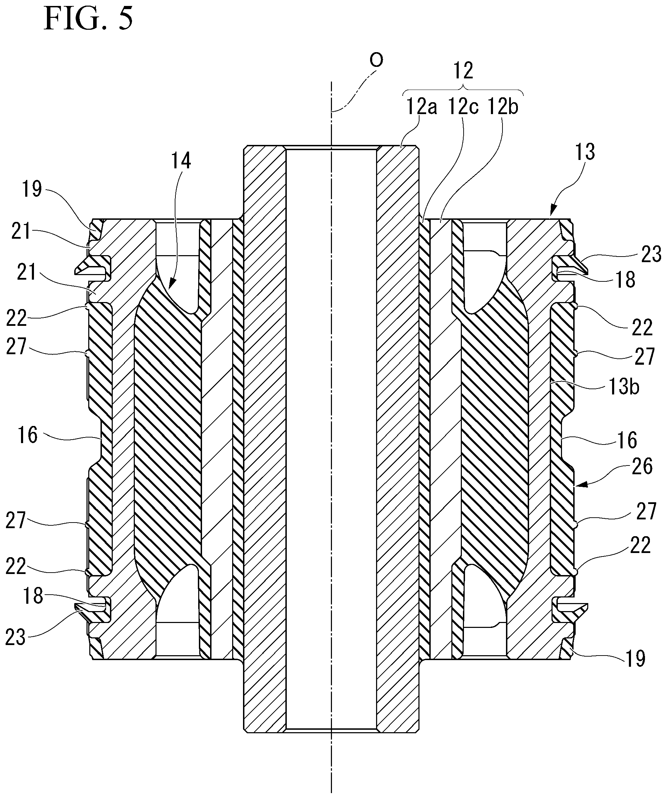

Hereinafter, a form of the main seal protrusion portion 23 in a state where the outer tube 11 is removed from the intermediate tube 13 will be described with reference to Fig. 3 and 5.

The main seal protrusion portion 23 is formed in a flange shape extending inward in the axial direction outward in the radial direction. In the main seal protrusion portions 23, an outer surface facing outward in the axial direction and an inner surface facing inward in the axial direction extend inward in the axial direction outward in the radial direction. The main seal protrusion portion 23 is disposed on the outer side in the axial direction between the two annular protrusion portions 21 adjacent to each other in the axial direction. The inner surface of the main seal protrusion portion 23 is separated outward in the axial direction from the annular protrusion portion 21 located on the inner side in the axial direction of the two annular protrusion portions 21 adjacent to each other in the axial direction. The outer surface of the main seal protrusion portion 23 protrudes outward in the radial direction from the axially inner end portion of the annular protrusion portion 21 located on the outer side in the axial direction of the two annular protrusion portions 21 adjacent to each other in the axial direction.

In the outer peripheral surface 13os of the intermediate tube 13, an end seal protrusion portion 19 which extends over the entire length in the circumferential direction and is pressed against the inner peripheral surface 11is of the outer tube 11 is provided at a portion located outside the main seal protrusion portion 23 in the axial direction. The end seal protrusion portion 19 is provided on a portion of the outer peripheral surface 13os of the intermediate tube 13 located outside the annular protrusion portion 21 in the axial direction, and both end portions of the inner peripheral surface 11is of the outer tube 11 in the axial direction are pressed against the end seal protrusion portion 19. The thickness of the end seal protrusion portion 19 becomes thicker outward in the axial direction. The end seal protrusion portion 19 is integrally formed with the coated rubber 26.

In the outer peripheral surface 13os of the intermediate tube 13, an outer seal protrusion portion 22 which extends over the entire length in the circumferential direction and is pressed against the inner peripheral surface 11is of the outer tube 11 is separately provided at each position sandwiched between two main seal protrusion portions 23 in the axial direction and sandwiching the liquid chamber 15 and the orifice passage 16 from both sides in the axial direction. The two outer seal protrusion portions 22 separately define both end edges of the liquid chamber 15 in the axial direction. The outer seal protrusion portion 22 may be separated outward in the axial direction from the liquid chamber 15. The outer seal protrusion portion 22 is integrally formed with the coated rubber 26.

As shown in Fig. 5, the outer seal protrusion portion 22 is located outside the outer peripheral surface of the annular protrusion portion 21 in the radial direction. The outer seal protrusion portion 22 is located on the inner side in the axial direction from the annular protrusion portion 21 located on the inner side in the axial direction of the two annular protrusion portions 21 adjacent to each other in the axial direction. In the shown example, positions in the axial direction of the axially outer end portion of the outer seal protrusion portion 22 and the axially inner end portion of the annular protrusion portion 21 located on the inner side in the axial direction of the two annular protrusion portions 21 adjacent to each other in the axial direction are equal to each other.

As shown in Fig. 3, in at least one of the two outer seal protrusion portions 22, a recessed portion 24 which is recessed inward in the radial direction and penetrates in the axial direction is formed in a portion separated from the liquid chamber 15 in the circumferential direction. The recessed portion 24 is separately formed in each of the two outer seal protrusion portions 22. The recessed portion 24 is provided at the central portion of the intermediate portion 13b of the intermediate tube 13 in the circumferential direction. A circumferential size of the recessed portion 24 is less than half a circumferential size of the intermediate portion 13b of the intermediate tube 13. A bottom surface of the recessed portion 24 is located outside the outer peripheral surface of the annular protrusion portion 21 in the radial direction. The bottom surface of the recessed portion 24 is substantially flush with each portion of the outer peripheral surface of the coated rubber 26 that is connected to the outer seal protrusion portion 22 from both sides in the axial direction.

A concave portion 18 which is recessed inward in the radial direction and of which at least a part has the same position in the circumferential direction as that of the recessed portion 24 is provided between the main seal protrusion portion 23 and the outer seal protrusion portion 22 that are adjacent to each other in the axial direction. The concave portion 18 is formed in a portion of the outer peripheral surface of the coated rubber 26 located between the main seal protrusion portion 23 and the outer seal protrusion portion 22 that are adjacent to each other in the axial direction. The concave portion 18 extends continuously over the entire length in the circumferential direction. The concave portion 18 is separated axially outward from the recessed portion 24. As shown in Fig. 5, the concave portion 18 is formed in a portion of the outer peripheral surface of the coated rubber 26 which is connected to the inner surface of the main seal protrusion portion 23. The concave portion 18 is provided between two annular protrusion portions 21 adjacent to each other in the axial direction.

As shown in Fig. 3, in the outer peripheral surface 13os of the intermediate tube 13, a first vertical seal protrusion portion (vertical seal protrusion portion) 28 which extends in the axial direction and is pressed against the inner peripheral surface 11is of the outer tube 11 is provided at each position adjacent to the liquid chamber 15 in the circumferential direction and sandwiching the orifice passage 16 from both sides in the axial direction. The first vertical seal protrusion portion 28 is integrally formed with the coated rubber 26. The width of the first vertical seal protrusion portion 28 is wider than the width of the outer seal protrusion portion 22.

The first vertical seal protrusion portion 28 is provided in a portion of the intermediate portion 13b of the intermediate tube 13 which is separated in the circumferential direction from the central portion in the circumferential direction. The first vertical seal protrusion portion 28 is provided in a portion of the intermediate portion 13b located inside in the circumferential direction from the end portion in the circumferential direction. The first vertical seal protrusion portion 28 may be provided at the central portion of the intermediate portion 13b in the circumferential direction or the end portion thereof in the circumferential direction.

When the intermediate portion 13b is viewed from the outside in the radial direction, a first vertical seal protrusion portion 28 located on one side of both sides sandwiching the orifice passage 16 in the axial direction and a first vertical seal protrusion portion 28 located on the other side thereof are disposed on both sides sandwiching the circumferentially central portion of the intermediate portion 13b in the circumferential direction. In the four first vertical seal protrusion portions 28 provided in the two intermediate portions 13b, the two first vertical seal protrusion portions 28 located on the same side in a state where the orifice passage 16 is sandwiched in the axial direction are disposed so as to be offset in the same direction in the circumferential direction from the central portion of the intermediate portion 13b in the circumferential direction when each intermediate portion 13b is viewed from the outside in the radial direction.

The first vertical seal protrusion portion 28 is provided on the outer peripheral surface 13os of the intermediate tube 13 over substantially the entire length in the axial direction at the portion sandwiched axially by the outer seal protrusion portion 22 and the orifice passage 16. The first vertical seal protrusion portion 28 is slightly separated outward in the axial direction from the orifice passage 16. The first vertical seal protrusion portion 28 extends continuously over the entire length in the axial direction thereof. The first vertical seal protrusion portion 28 is provided in a portion avoiding the recessed portion 24. The first vertical seal protrusion portion 28 extends inward in the axial direction from the outer seal protrusion portion 22.

In the outer peripheral surface 13os of the intermediate tube 13, an inner seal protrusion portion 27 which extends in the circumferential direction and is pressed against the inner peripheral surface 11is of the outer tube 11 is separately provided at each position which is adjacent to the liquid chamber 15 in the circumferential direction and sandwiches the orifice passage 16 from both sides in the axial direction. The inner seal protrusion portion 27 is integrally formed with the coated rubber 26.

The inner seal protrusion portion 27 extends from the first vertical seal protrusion portion 28 toward the side in which the recessed portion 24 is located with respect to the first vertical seal protrusion portion 28 in the circumferential direction. The inner seal protrusion portion 27 extends in the circumferential direction from an axial intermediate portion 28m of the first vertical seal protrusion portion 28. The inner seal protrusion portion 27 faces the recessed portion 24 in the axial direction. In the shown example, the inner seal protrusion portion 27 is provided over the entire length in the circumferential direction in the intermediate portion 13b of the intermediate tube 13. The inner seal protrusion portion 27 is continuously provided over the entire length in the circumferential direction in the intermediate portion 13b. The inner seal protrusion portion 27 is provided at the central portion in the axial direction between the outer seal protrusion portion 22 and the orifice passage 16.

For example, the inner seal protrusion portion 27 may be changed as appropriate, such as being provided in a part of the intermediate portion 13b in the circumferential direction, extending intermittently in the circumferential direction, or being provided at a position separated in the axial direction from the central portion in the axial direction between the outer seal protrusion portion 22 and the orifice passage 16.

The widths of the inner seal protrusion portion 27 and the outer seal protrusion portion 22 are equal to each other. The radial positions of the inner seal protrusion portion 27, the outer seal protrusion portion 22, and the first vertical seal protrusion portion 28 at the outer end portions in the radial direction are equal to each other.

The widths of the inner seal protrusion portion 27 and the outer seal protrusion portion 22 may be different from each other, and the radial positions of the inner seal protrusion portion 27, the outer seal protrusion portion 22, and the first vertical seal protrusion portion 28 at the outer end portions in the radial direction may be different from each other.

In the outer peripheral surface 13os of the intermediate tube 13, a second vertical seal protrusion portion 29 which extends in the axial direction and is pressed against the inner peripheral surface 11is of the outer tube 11 is provided at a portion which is sandwiched in the axial direction by the inner seal protrusion portion 27 and the orifice passage 16 and separated in the circumferential direction from the first vertical seal protrusion portion 28 to the side where the recessed portion 24 is located with respect to the first vertical seal protrusion portion 28. The second vertical seal protrusion portion 29 extends inward in the axial direction from the inner seal protrusion portion 27. The positions of the axially inner end portions of the second vertical seal protrusion portion 29 and the first vertical seal protrusion portion 28 in the axial direction are equivalent to each other. The width of the second vertical seal protrusion portion 29 is equal to the width of the first vertical seal protrusion portion 28. The radial positions of the second vertical seal protrusion portion 29 and the first vertical seal protrusion portion 28 at the outer end portions in the radial direction are equal to each other.

The second vertical seal protrusion portion 29 is located so as to be separated to a side opposite to the first vertical seal protrusion portion 28 with respect to the central portion in the circumferential direction in the intermediate portion 13b of the intermediate tube 13. The second vertical seal protrusion portion 29 is provided on the side opposite to the first vertical seal protrusion portion 28 which sandwiches the recessed portion 24 in the circumferential direction. The second vertical seal protrusion portion 29 and the first vertical seal protrusion portion 28 are separated from the recessed portion 24 in the circumferential direction. The second vertical seal protrusion portion 29 and the first vertical seal protrusion portion 28 may be located at the same positions in the circumferential direction as both end edges in the circumferential direction in the recessed portion 24.

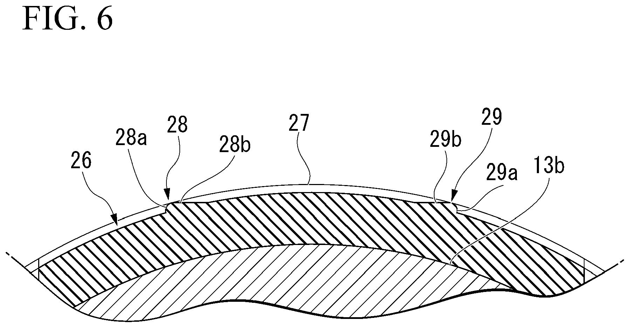

As shown in Fig. 6, the first vertical seal protrusion portion 28 and the second vertical seal protrusion portion 29 are provided to be closer to one of the two liquid chambers 15 than the other in the circumferential direction. In the surfaces of the first vertical seal protrusion portion 28 and the second vertical seal protrusion portion 29, inclination angles against the radial direction of the surfaces 28a and 29a facing one liquid chamber 15 side along the circumferential direction are smaller than the inclination angles of the surfaces 28b and 29b facing the other liquid chamber 15 side along the circumferential direction. That is, the former surfaces 28a and 29a rise sharply from the outer peripheral surface side of the intermediate tube 13 as compared with the latter surfaces 28b and 29b.

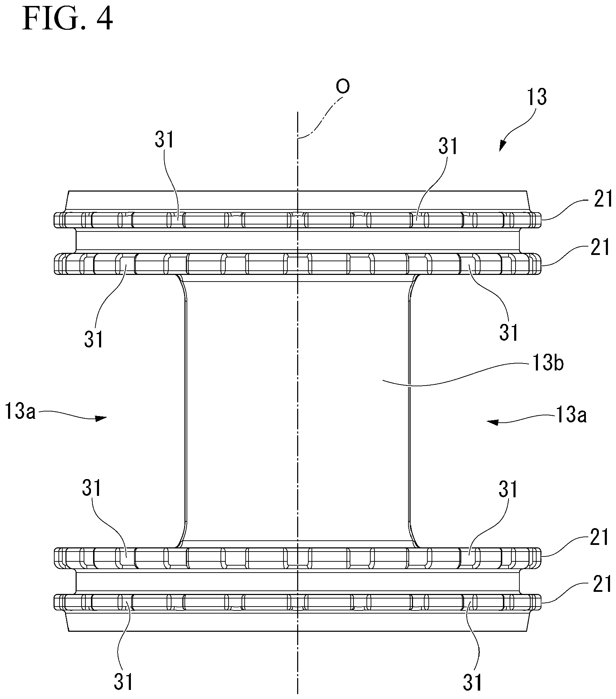

Here, as shown in Fig. 2 and 4, the outer peripheral surface of the annular protrusion portion 21 of the intermediate tube 13 is formed with a vertical hole 31 which is recessed inward in the radial direction and penetrates in the axial direction. The vertical hole 31 is formed on the outer peripheral surface of the annular protrusion portion 21 located at least on the innermost side in the axial direction among the plurality of annular protrusion portions 21 located at the same axial end portion on the outer peripheral surface 13os of the intermediate tube 13. In the shown example, vertical holes 31 are separately formed on the outer peripheral surfaces of the plurality of annular protrusion portions 21.

The plurality of vertical holes 31 are provided at intervals in the circumferential direction on the outer peripheral surface of the annular protrusion portion 21. In the plurality of annular protrusion portions 21 located at the same axial end portion on the outer peripheral surface 13os of the intermediate tube 13, the central portions in the circumferential direction of the vertical hole 31 provided in one annular protrusion portion 21 and the vertical hole 31 provided in the other annular protrusion portion 21 coincide with each other. That is, the central portions in the circumferential direction of the vertical holes 31 adjacent to each other in the axial direction coincide with each other.

In the plurality of annular protrusion portions 21 located at the same axial end portion on the outer peripheral surface 13os of the intermediate tube 13, an internal volume of the vertical hole 31 formed in the annular protrusion portion 21 located on the inside in the axial direction is equal to or larger than an internal volume of the vertical hole 31 formed in the annular protrusion portion 21 located on the outside in the axial direction.

In the shown example, a circumferential size and an axial size of the former vertical hole 31 are larger than a circumferential size and an axial size of the latter vertical hole 31. Depths of the vertical holes 31 of both are equal to each other.

For example, the depth of the former vertical hole 31 may be deeper than the depth of the latter vertical hole 31, and the internal volume of the former vertical hole 31 may be smaller than the internal volume of the latter vertical hole 31.

All the vertical holes 31 are filled with a part of the coated rubber 26. As shown in Fig. 2, a positioning protrusion portion 25 which protrudes outward in the radial direction to extend in the axial direction and is pressed against the inner peripheral surface 11 is of the outer tube 11 is formed at each portion of the coated rubber 26 located in the vertical hole 31.

That is, as shown in Fig. 3, the plurality of positioning protrusion portions 25 are provided at intervals in the circumferential direction at both end portions in the axial direction located outside the liquid chamber 15 and the orifice passage 16 in the axial direction on the outer peripheral surface 13os of the intermediate tube 13, and a plurality of protrusion portion rows 32 in which the plurality of positioning protrusion portions 25 are provided at intervals in the circumferential direction are provided at intervals in the axial direction at both end portions in the axial direction on the outer peripheral surface 13os of the intermediate tube 13. The plurality of protrusion portion rows 32 are integrally formed with the coated rubber 26.

The protrusion portion rows 32 are provided on both sides of the main seal protrusion portions 23 in the axial direction. The positioning protrusion portion 25 of the protrusion portion row 32 located outside the main seal protrusion portion 23 in the axial direction extends outward in the axial direction from the main seal protrusion portion 23. The positioning protrusion portion 25 of the protrusion portion row 32 located inside the main seal protrusion portion 23 in the axial direction is separated in the axial direction from the main seal protrusion portion 23 and extends outward in the axial direction from the outer seal protrusion portion 22.

In the plurality of protrusion portion rows 32 located at the same end portion in the axial direction on the outer peripheral surface 13os of the intermediate tube 13, the width of the positioning protrusion portion 25 of the protrusion portion row 32 located on the inside in the axial direction is equal to or larger than the width of the positioning protrusion portion 25 of the protrusion portion row 32 located on the outside in the axial direction. The first vertical seal protrusion portion 28 is axially connected to one of the positioning protrusion portions 25 of the former protrusion portion row 32 via the outer seal protrusion portion 22, and the first vertical seal protrusion portion 28 is axially connected to the positioning protrusion portions 25 having the largest width of the plurality of positioning protrusion portions 25 provided on the intermediate tube 13. The width of the positioning protrusion portion 25 is equal to the width of the first vertical seal protrusion portion 28. In the surface of the positioning protrusion portion 25 having the largest width, each surface facing the circumferential direction is inclined in the same manner as the surfaces 28a and 28b of the first vertical seal protrusion portion 28.

The width of the positioning protrusion portion 25 is equal to or less than the size of the vertical hole 31 in the circumferential direction. The circumferential end edge of the positioning protrusion portion 25 is located on the inside in the circumferential direction or at the same position in circumferential direction with respect to the circumferential end edge of the vertical hole 31.

In the plurality of protrusion portion rows 32 located at the same axial end portion on the outer peripheral surface 13os of the intermediate tube 13, the central portions in the circumferential direction of the positioning protrusion portion 25 of one protrusion portion row 32 and the positioning protrusion portion 25 of the other protrusion portion row 32 coincide with each other. That is, the central portions in the circumferential direction of the positioning protrusion portions 25 adjacent to each other in the axial direction coincide with each other.

The elastic body 14, the stopper protrusion portion 17, the coated rubber 26, the main seal protrusion portion 23, the outer seal protrusion portion 22, the positioning protrusion portion 25, the first vertical seal protrusion portion 28, the second vertical seal protrusion portion 29, the inner seal protrusion portion 27, and the end seal protrusion portion 19 are integrally formed by injection molding of unvulcanized rubber.

A gate portion at the time of injection molding is provided on the inner side in the axial direction from the outer seal protrusion portion 22, for example, in the stopper protrusion portion 17 or the like.

The gate portion at the time of injection molding may be located on the outer side in the axial direction from the outer seal protrusion portion 22.

Then, when vibration is input to the liquid sealing bush 1, the internal volumes of the two liquid chambers 15 are changed while the elastic body 14 elastically deforms. Accordingly, the liquid in the liquid chamber 15 flows through the orifice passage 16, a liquid column resonance is generated, and thus, the vibration is attenuated and absorbed.

As described above, according to the liquid sealing bush 1 of the present embodiment, the main seal protrusion portion 23 and the outer seal protrusion portion 22 are provided on the outer peripheral surface 13os of the intermediate tube 13, each portion between the outer peripheral surface 13os of the intermediate tube 13 and the inner peripheral surface 11is of the outer tube 11 that sandwiches the liquid chamber 15 and the orifice passage 16 from both sides in the axial direction is sealed at least twice, and thus, it is possible to reliably secure sealing property of each of the liquid chamber 15 and the orifice passage 16.

Since at least one of the two outer seal protrusion portions 22 is formed with the recessed portion 24 which is recessed inward in the radial direction and penetrates in the axial direction, when the liquid is injected into the two liquid chambers 15 and the orifice passage 16, the air between the main seal protrusion portion 23 and the outer seal protrusion portion 22 adjacent to each other in the axial direction can be easily discharged to the outside by passing through the recessed portion 24.

Since the recessed portion 24 is formed at a portion of the outer seal protrusion portion 22 separated from the liquid chamber 15 in the circumferential direction, it is possible to prevent the liquid in the liquid chamber 15 from leaking through the recessed portion 24 between the main seal protrusion portion 23 and the outer seal protrusion portion 22 adjacent to each other in the axial direction, and thus, it is possible to stably exhibit the desired anti-vibration performance.

Since the inner seal protrusion portion 27 pressed against the inner peripheral surface 11is of the outer tube 11 is provided on the outer peripheral surface 13os of the intermediate tube 13, the inner seal protrusion portion 27 comes into sliding contact with the inner peripheral surface 11is of the outer tube 11 when the intermediate tube 13 is fitted into the outer tube 11, and thus, the intermediate tube 13 and the outer tube 11 can be easily positioned coaxially without being eccentric.

The inner seal protrusion portion 27 extends in the circumferential direction and is provided at each position on the outer peripheral surface 13os of the intermediate tube 13 so as to be adjacent to the liquid chamber 15 in the circumferential direction and to sandwich the orifice passage 16 from both sides in the axial direction. Therefore, it is possible to prevent the liquid in the orifice passage 16 from flowing toward the recessed portion 24 along the axial direction, and it is possible to stably exhibit the desired anti-vibration performance.

Since the first vertical seal protrusion portion 28 pressed against the inner peripheral surface 11is of the outer tube 11 is provided on the outer peripheral surface 13os of the intermediate tube 13, when the intermediate tube 13 is fitted into the outer tube 11, the first vertical seal protrusion portion 28 comes into sliding contact with the inner peripheral surface 11is of the outer tube 11, and thus, the intermediate tube 13 and the outer tube 11 can be easily positioned coaxially without being eccentric.

The first vertical seal protrusion portion 28 is provided on the outer peripheral surface 13os of the intermediate tube 13 over substantially the entire length in the axial direction at the portion adjacent to the liquid chamber 15 in the circumferential direction and located between the outer seal protrusion portion 22 and the orifice passage 16. Therefore, it is possible to prevent the liquid in one liquid chamber 15 from reaching the other liquid chamber 15 without passing through the orifice passage 16, and it is possible to stably exhibit the desired anti-vibration performance.

The concave portion 18 is provided between the main seal protrusion portion 23 and the outer seal protrusion portion 22 adjacent to each other in the axial direction, and when liquid is injected into the two liquid chambers 15 and the orifice passage 16, although it is difficult to exhaust air between the main seal protrusion portion 23 and the outer seal protrusion portion 22, at least a part of the concave portion 18 has the same position in the circumferential direction as the recessed portion 24. Therefore, this air can be easily introduced from the concave portion 18 into the recessed portion 24, and can be discharged to the outside without delay.

Since the main seal protrusion portion 23 is formed in a flange shape extending inward in the axial direction outward in the radial direction, when the intermediate tube 13 is fitted into the outer tube 11, for example, compared with a film-shaped seal member provided on the outer peripheral surface 13os of the intermediate tube 13, the main seal protrusion portion 23 is easily deformed elastically. Accordingly, an axial force required to fit the intermediate tube 13 into the outer tube 11 can be reduced, and it is possible to prevent the intermediate tube 13 from being deformed or damaged at the time of this fitting.

When the fitting of the intermediate tube 13 into the outer tube 11 is completed, the main seal protrusion portion 23 is closely pressed against the inner peripheral surface 11is of the outer tube 11 by an elastic restoring force, and the sealing properties of the liquid chamber 15 and the orifice passage 16 can be secured.

In the outer peripheral surface 13os of the intermediate tube 13, the end seal protrusion portion 19 extending over the entire length in the circumferential direction and pressed against the inner peripheral surface 11is of the outer tube 11 is provided at the portion located outside the main seal protrusion portion 23 in the axial direction. Therefore, the sealing properties of the liquid chamber 15 and the orifice passage 16 can be reliably secured.

As described above, according to the liquid sealing bush 1 of the present embodiment, the plurality of positioning protrusion portions 25 extending in the axial direction are provided at intervals in the circumferential direction at both end portions in the axial direction on the outer peripheral surface 13os of the intermediate tube 13. Accordingly, even though the outer tube 11 and the intermediate tube 13 are not positioned coaxially before the intermediate tube 13 is fitted into the outer tube 11, when the outer tube 11 and the intermediate tube 13 move relatively close to each other in the axial direction, the outer tube 11 and the intermediate tube 13 can be naturally coaxially positioned by sliding the positioning protrusion portion 25 into contact with the opening portion of the outer tube 11. As a result, the intermediate tube 13 can be easily fitted into the outer tube 11 without generating a portion where an excessively large load is applied.

Further, since the positioning protrusion portion 25 is pressed against the inner peripheral surface 11is of the outer tube 11, it is possible to prevent the outer tube 11 and the intermediate tube 13 from being relatively displaced in the axial direction.

The plurality of protrusion portion rows 32 in which the plurality of positioning protrusion portions 25 are provided at intervals in the circumferential direction are provided at intervals in the axial direction at both end portions in the axial direction on the outer peripheral surface 13os of the intermediate tube 13. Therefore, even when the outer tube 11 and the intermediate tube 13 are not positioned coaxially before the intermediate tube 13 is fitted into the outer tube 11, the intermediate tube 13 can be easily and reliably fitted into the outer tube 11 without generating a portion where an excessively large load is applied.

Since the protrusion portion rows 32 are provided on both sides of the main seal protrusion portion 23 in the axial direction, even when the outer tube 11 and the intermediate tube 13 are not coaxially positioned before the intermediate tube 13 is fitted into the outer tube 11, the intermediate tube 13 can be easily and reliably fitted into the outer tube 11 without generating a portion where an excessively large load is applied.

Since the positioning protrusion portion 25 of the protrusion portion row 32 located outside the main seal protrusion portion 23 in the axial direction extends outward in the axial direction from the main seal protrusion portion 23, when the intermediate tube 13 is fitted into the outer tube 11, the main seal protrusion portion 23 can be prevented from collapsing outward in the axial direction, and the sealing property with the inner peripheral surface 11is of the outer tube 11 can be reliably secured at both end portions in the axial direction in the intermediate tube 13.

In the plurality of protrusion portion rows 32 located at the same end portion in the axial direction on the outer peripheral surface 13os of the intermediate tube 13, the width of the positioning protrusion portion 25 of the protrusion portion row 32 located on the inside in the axial direction is equal to or larger than the width of the positioning protrusion portion 25 of the protrusion portion row 32 located on the outside in the axial direction. Accordingly, when the plurality of protrusion portion rows 32 and the coated rubber 26 are provided on the outer peripheral surface 13os of the intermediate tube 13 by injection molding of unvulcanized rubber, the unvulcanized rubber can smoothly flow from the inside to the outside in the axial direction, and thus, the plurality of protrusion portion rows 32 and the coated rubber 26 can be easily provided on the outer peripheral surface 13os of the intermediate tube 13.

Since the first vertical seal protrusion portion 28 is provided on the outer peripheral surface 13os of the intermediate tube 13, when vibration is input, the flow of the liquid leaking from one liquid chamber 15 to the other liquid chamber 15 without passing through the orifice passage 16 can be blocked. Accordingly, it is possible to prevent the liquid leaking from one liquid chamber 15 from entering the other liquid chamber 15 without passing through the orifice passage 16 when the vibration is input, and thus, it is possible to stably exhibit the desired anti-vibration performance.

The first vertical seal protrusion portion 28 is connected to the positioning protrusion portion 25 having the largest width among the plurality of positioning protrusion portions 25, and the width of the positioning protrusion portion 25 is equal to the width of the first vertical seal protrusion portion 28. Therefore, it is possible to increase rigidity of the first vertical seal protrusion portion 28, and when vibration is input, the flow of the liquid leaking from one liquid chamber 15 to the other liquid chamber 15 without passing through the orifice passage 16 can be reliably blocked.

Since at least one of the two outer seal protrusion portions 22 is formed with the recessed portion 24 that is recessed inward in the radial direction and penetrates in the axial direction, in a case where vibration is input, even when the liquid is leaked from one liquid chamber 15, this liquid can be introduced through the recessed portion 24 between the main seal protrusion portion 23 and the outer seal protrusion portion 22 adjacent to each other in the axial direction, and it is possible to prevent the liquid from entering the other liquid chamber 15.

In the outer peripheral surface 13os of the intermediate tube 13, the first vertical seal protrusion portion 28 which extends inward in the axial direction from the outer seal protrusion portion 22 and is pressed against the inner peripheral surface 11is of the outer tube 11 is provided at the portion which is axially sandwiched by the outer seal protrusion portion 22 and the orifice passage 16 and avoids the recessed portion 24. Accordingly, when vibration is input, the flow of the liquid leaking from one liquid chamber 15 to the other liquid chamber 15 without entering the recessed portion 24 can be blocked, the liquid can be introduced into the recessed portion 24, and it is possible to reliably prevent the liquid leaked from one liquid chamber 15 from entering the other liquid chamber 15.

Since the recessed portion 24 and the first vertical seal protrusion portion 28 are provided, for example, even when a vibration having a large amplitude is input, the liquid leaked from one liquid chamber 15 can be introduced through the recessed portion 24 between the main seal protrusion portion 23 and the outer seal protrusion portion 22 adjacent to each other in the axial direction in the same manner as described above, and thus, even when an on-off valve or the like is not provided, it is possible to prevent the internal pressure of the liquid chamber 15 from becoming too high. Therefore, it is possible to improve durability of the liquid sealing bush 1 without generating an unintended leak due to the structure of the on-off valve or the like.

Since the inner seal protrusion portion 27 extends from the first vertical seal protrusion portion 28 toward the side where the recessed portion 24 is located with respect to the first vertical seal protrusion portion 28 in the circumferential direction, the orifice passage 16 and the recessed portion 24 can be divided in the axial direction by the inner seal protrusion portion 27, and it is possible to prevent the liquid in the orifice passage 16 from leaking and it is possible to smoothly introduce the liquid leaked from the liquid chamber 15 into the recessed portion 24.

In the outer peripheral surface 13os of the intermediate tube 13, the second vertical seal protrusion portion 29 is provided at a portion located on the side opposite to the first vertical seal protrusion portion 28 which sandwiches the recessed portion 24 in the circumferential direction and is connected to the inner seal protrusion portion 27. Accordingly, it is possible to secure rigidity of the portion of the inner seal protrusion portion 27 which is located between the first vertical seal protrusion portion 28 and the second vertical seal protrusion portion 29 and faces the recessed portion 24 in the axial direction, and it is possible to prevent the liquid in the orifice passage 16 from leaking toward the recessed portion 24 side.

Since the second vertical seal protrusion portion 29 extends inward in the axial direction from the inner seal protrusion portion 27, it is possible to prevent the flow of the liquid leaked from the liquid chamber 15 toward the recessed portion 24 from being obstructed by the second vertical seal protrusion portion 29.

Since the concave portion 18 is provided between the main seal protrusion portion 23 and the outer seal protrusion portion 22 adjacent to each other in the axial direction, the liquid which is leaked from the liquid chamber 15 and introduced between the main seal protrusion portion 23 and the outer seal protrusion portion 22 adjacent to each other in the axial direction through the recessed portion 24 can be entered into the concave portion 18, and the liquid can be prevented from leaking to the outside of the liquid sealing bush 1.

Since the width of the first vertical seal protrusion portion 28 is wider than the width of the outer seal protrusion portion 22, the flow of the liquid leaking from one liquid chamber 15 to the other liquid chamber 15 without entering into the recessed portion 24 can be reliably blocked, and the liquid can be introduced into the recessed portion 24.

According to the present invention, the main seal protrusion portion and the outer seal protrusion portion are provided on the outer peripheral surface of the intermediate tube, each portion between the outer peripheral surface of the intermediate tube and the inner peripheral surface of the outer tube that sandwiches the liquid chamber and the orifice passage from both sides in the axial direction is sealed at least twice, and thus, it is possible to reliably secure sealing property of each of the liquid chamber and the orifice passage.

Since at least one of the two outer seal protrusion portions is formed with the recessed portion which is recessed inward in the radial direction and penetrates in the axial direction, when the liquid is injected into the two liquid chambers and the orifice passage, the air between the main seal protrusion portion and the outer seal protrusion portion adjacent to each other in the axial direction can be easily discharged to the outside by passing through the recessed portion.

Since the recessed portion is formed at a portion of the outer seal protrusion portion separated from the liquid chamber in the circumferential direction, it is possible to prevent the liquid in the liquid chamber from leaking through the recessed portion between the main seal protrusion portion and the outer seal protrusion portion adjacent to each other in the axial direction, and thus, it is possible to stably exhibit the desired anti-vibration performance.

In the outer peripheral surface of the intermediate tube, the inner seal protrusion portion which extends in the circumferential direction and is pressed against the inner peripheral surface of the outer tube is separately provided at each position which is adjacent to the liquid chamber in the circumferential direction and sandwiches the orifice passage from both sides in the axial direction.

In this case, since the inner seal protrusion portion pressed against the inner peripheral surface is of the outer tube is provided on the outer peripheral surface of the intermediate tube, the inner seal protrusion portion comes into sliding contact with the inner peripheral surface of the outer tube when the intermediate tube is fitted into the outer tube, and thus, the intermediate tube and the outer tube can be easily positioned coaxially without being eccentric.

The inner seal protrusion portion extends in the circumferential direction and is provided at each position on the outer peripheral surface of the intermediate tube so as to be adjacent to the liquid chamber in the circumferential direction and to sandwich the orifice passage from both sides in the axial direction. Therefore, it is possible to prevent the liquid in the orifice passage from flowing toward the recessed portion along the axial direction, and it is possible to stably exhibit the desired anti-vibration performance.

A first vertical seal protrusion portion which extends in the axial direction and is pressed against the inner peripheral surface of the outer tube may be provided at each position of the outer peripheral surface of the intermediate tube which is adjacent to the liquid chamber in the circumferential direction and sandwiches the orifice passage from both sides in the axial direction.

In this case, since the first vertical seal protrusion portion which is pressed against the inner peripheral surface of the outer tube is provided on the outer peripheral surface of the intermediate tube, when the intermediate tube is fitted into the outer tube, the first vertical seal protrusion portion comes into sliding contact with the inner peripheral surface of the outer tube, and thus, the intermediate tube and the outer tube can be easily positioned coaxially without being eccentric.

When the first vertical seal protrusion portion is provided on the outer peripheral surface of the intermediate tube over substantially the entire length in the axial direction at the portion adjacent to the liquid chamber in the circumferential direction and located between the outer seal protrusion portion and the orifice passage, it is possible to prevent the liquid in one liquid chamber from reaching the other liquid chamber without passing through the orifice passage, and it is possible to stably exhibit the desired anti-vibration performance.

The concave portion which is recessed inward in the radial direction and of which at least a part has the same position in the circumferential direction as that of the recessed portion may be provided between the main seal protrusion portion and the outer seal protrusion portion that are adjacent to each other in the axial direction.

In this case, the concave portion is provided between the main seal protrusion portion and the outer seal protrusion portion adjacent to each other in the axial direction, and when liquid is injected into the two liquid chambers and the orifice passage, although it is difficult to exhaust air between the main seal protrusion portion and the outer seal protrusion portion, at least a part of the concave portion has the same position in the circumferential direction as the recessed portion. Therefore, this air can be easily introduced from the concave portion into the recessed portion, and can be discharged to the outside without delay.

The main seal protrusion portion may be formed in a flange shape extending toward the outer seal protrusion portion side along the axial direction outward in the radial direction.

In this case, since the main seal protrusion portion is formed in a flange shape extending toward the outer seal protrusion portion side along the axial direction outward in the radial direction, when the intermediate tube is fitted into the outer tube, for example, compared with a film-shaped seal member provided on the outer peripheral surface of the intermediate tube, the main seal protrusion portion is easily deformed elastically, the axial force required to fit the intermediate tube into the outer tube can be reduced, and it is possible to prevent the intermediate tube from being deformed or damaged at the time of this fitting.

When the fitting of the intermediate tube into the outer tube is completed, the main seal protrusion portion is closely pressed against the inner peripheral surface of the outer tube by an elastic restoring force, and the sealing properties of the liquid chamber and the orifice passage can be secured.

In the outer peripheral surface of the intermediate tube, the end seal protrusion portion extending over the entire length in the circumferential direction and pressed against the inner peripheral surface of the outer tube may be provided at the portion located on the side opposite to the outer seal protrusion portion along the axial direction from the main seal protrusion portion.

In this case, in the outer peripheral surface of the intermediate tube, since the end seal protrusion portion extending over the entire length in the circumferential direction and pressed against the inner peripheral surface of the outer tube is provided at the portion located on the side opposite to the outer seal protrusion portion along the axial direction from the main seal protrusion portion, the sealing properties of the liquid chamber and the orifice passage can be reliably secured.

In the outer peripheral surface of the intermediate tube, the plurality of positioning protrusion portions extending in the axial direction and pressed against the inner peripheral surface of the outer tube are provided at intervals in the circumferential direction at both end portions in the axial direction located on the outside in the axial direction along the central axis of the liquid sealing bush from the liquid chamber and the orifice passage.

According to the present invention, since the plurality of positioning protrusion portions extending in the axial direction are provided at intervals in the circumferential direction at both end portions in the axial direction on the outer peripheral surface of the intermediate tube, even though the outer tube and the intermediate tube are not positioned coaxially before the intermediate tube is fitted into the outer tube, when the outer tube and the intermediate tube move relatively close to each other in the axial direction, the outer tube and the intermediate tube can be naturally coaxially positioned by sliding the positioning protrusion portion into contact with the opening portion of the outer tube. As a result, the intermediate tube can be easily fitted into the outer tube without generating a portion where an excessively large load is applied.

Further, since the positioning protrusion portion is pressed against the inner peripheral surface of the outer tube, it is possible to prevent the outer tube and the intermediate tube from being relatively displaced in the axial direction.

The plurality of protrusion portion rows in which the plurality of positioning protrusion portions are provided at intervals in the circumferential direction may be provided at intervals in the axial direction at both end portions in the axial direction on the outer peripheral surface of the intermediate tube.

In this case, the plurality of protrusion portion rows in which the plurality of positioning protrusion portions are provided at intervals in the circumferential direction are provided at intervals in the axial direction at both end portions in the axial direction on the outer peripheral surface of the intermediate tube. Therefore, even when the outer tube and the intermediate tube are not positioned coaxially before the intermediate tube is fitted into the outer tube, the intermediate tube can be easily and reliably fitted into the outer tube without generating a portion where an excessively large load is applied.

The main seal protrusion portion extending over the entire length in the circumferential direction and pressed against the inner peripheral surface of the outer tube may be separately provided at both end portions of the outer peripheral surface of the intermediate tube in the axial direction, and the protrusion portion rows may be provided on both sides of the main seal protrusion portion in the axial direction.

In this case, since the protrusion portion rows are provided on both sides of the main seal protrusion portion in the axial direction, even when the outer tube and the intermediate tube are not positioned coaxially before the intermediate tube is fitted into the outer tube, the intermediate tube can be easily and reliably fitted into the outer tube without generating a portion where an excessively large load is applied.

The positioning protrusion portions of the protrusion portion row located outside the main seal protrusion portion in the axial direction may extend outward in the axial direction from the main seal protrusion portion.

In this case, since the positioning protrusion portion of the protrusion portion row located outside the main seal protrusion portion in the axial direction extends outward in the axial direction from the main seal protrusion portion, when the intermediate tube is fitted into the outer tube, the main seal protrusion portion can be prevented from collapsing outward in the axial direction, and the sealing property with the inner peripheral surface of the outer tube can be reliably secured at both end portions in the axial direction in the intermediate tube.

The coated rubber is provided on the outer peripheral surface of the intermediate tube, the plurality of protrusion portion rows are integrally formed with the coated rubber, and in the plurality of protrusion portion rows located at the same axial end portion on the outer peripheral surface of the intermediate tube, the width of the positioning protrusion portion of the protrusion portion row located on the inside in the axial direction may be equal to or larger than the width of the positioning protrusion portion of the protrusion portion row located on the outside in the axial direction.

In this case, since in the plurality of protrusion portion rows located at the same axial end portion on the outer peripheral surface of the intermediate tube, the width of the positioning protrusion portion of the protrusion portion row located on the inside in the axial direction may be equal to or larger than the width of the positioning protrusion portion of the protrusion portion row located on the outside in the axial direction, when the plurality of protrusion portion rows and the coated rubber are provided on the outer peripheral surface of the intermediate tube by injection molding of unvulcanized rubber, the unvulcanized rubber can smoothly flow from the inside to the outside in the axial direction, and thus, the plurality of protrusion portion rows and the coated rubber can be easily provided on the outer peripheral surface of the intermediate tube.

In the outer peripheral surface of the intermediate tube, the first vertical seal protrusion portion which extends in the axial direction and is pressed against the inner peripheral surface of the outer tube may be provided at each position which is adjacent to the liquid chamber in the circumferential direction and sandwiches the orifice passage from both sides in the axial direction, the first vertical seal protrusion portion may be axially connected to the positioning protrusion portion having the largest width among the plurality of positioning protrusion portions, and the width of the positioning protrusion portion may be equal to the width of the first vertical seal protrusion portion.

In this case, since the first vertical seal protrusion portion which is pressed against the inner peripheral surface of the outer tube is provided on the outer peripheral surface of the intermediate tube, when the intermediate tube is fitted into the outer tube, the first vertical seal protrusion portion comes into sliding contact with the inner peripheral surface of the outer tube, and thus, the intermediate tube and the outer tube can be easily positioned coaxially without being eccentric.

Since the first vertical seal protrusion portion is provided on the outer peripheral surface of the intermediate tube, when vibration is input, the flow of the liquid leaking from one liquid chamber to the other liquid chamber without passing through the orifice passage can be blocked. Accordingly, it is possible to prevent the liquid leaking from one liquid chamber from entering the other liquid chamber without passing through the orifice passage when the vibration is input, and thus, it is possible to stably exhibit the desired anti-vibration performance.

The first vertical seal protrusion portion is connected to the positioning protrusion portion having the largest width among the plurality of positioning protrusion portions, and the width of the positioning protrusion portion is equal to the width of the first vertical seal protrusion portion. Therefore, it is possible to increase rigidity of the first vertical seal protrusion portion, and when vibration is input, the flow of the liquid leaking from one liquid chamber to the other liquid chamber without passing through the orifice passage can be reliably blocked.

In the outer peripheral surface of the intermediate tube, the first vertical seal protrusion portion which extends toward the orifice passage side along the axial direction from the outer seal protrusion portion and is pressed against the inner peripheral surface of the outer tube is provided at the portion which is axially sandwiched by the outer seal protrusion portion and the orifice passage and avoids the recessed portion.

Since at least one of the two outer seal protrusion portions is formed with the recessed portion that is recessed inward in the radial direction and penetrates in the axial direction, in a case where vibration is input, even when the liquid is leaked from one liquid chamber, this liquid can be introduced through the recessed portion between the main seal protrusion portion and the outer seal protrusion portion adjacent to each other in the axial direction, and it is possible to prevent the liquid from entering the other liquid chamber.

In the outer peripheral surface of the intermediate tube, the first vertical seal protrusion portion which extends toward the orifice passage along the axial direction from the outer seal protrusion portion and is pressed against the inner peripheral surface of the outer tube is provided at the portion which is axially sandwiched by the outer seal protrusion portion and the orifice passage and avoids the recessed portion. Accordingly, when vibration is input, the flow of the liquid leaking from one liquid chamber to the other liquid chamber without entering the recessed portion can be blocked, the liquid can be introduced into the recessed portion, and it is possible to reliably prevent the liquid leaked from one liquid chamber entering the other liquid chamber.

Since the recessed portion and the first vertical seal protrusion portion are provided, for example, even when a vibration having a large amplitude is input, the liquid leaked from one liquid chamber can be introduced between the main seal protrusion portion and the outer seal protrusion portion adjacent to each other in the axial direction through the recessed portion in the same manner as described above, and thus, even when an on-off valve or the like is not provided, it is possible to prevent the internal pressure of the liquid chamber from becoming too high. Therefore, it is possible to improve durability of the liquid sealing bush without generating an unintended leak due to the structure of the on-off valve or the like.

In the outer peripheral surface of the intermediate tube, the inner seal protrusion portion which extends in the circumferential direction and is pressed against the inner peripheral surface of the outer tube may be separately provided at each position which is adjacent to the liquid chamber in the circumferential direction and sandwiches the orifice passage from both sides in the axial direction, and the inner seal protrusion portion may extend from the first vertical seal protrusion portion toward the side where the recessed portion is located with respect to the first vertical seal protrusion portion in the circumferential direction.

In this case, since the inner seal protrusion portion extends from the first vertical seal protrusion portion toward the side where the recessed portion is located with respect to the first vertical seal protrusion portion in the circumferential direction, the orifice passage and the recessed portion can be divided in the axial direction by the inner seal protrusion portion, and it is possible to prevent the liquid in the orifice passage from leaking and smoothly introduce the liquid leaked from the liquid chamber into the recessed portion.

The inner seal protrusion portion may extend in the circumferential direction from the axial intermediate portion of the first vertical seal protrusion portion, and in the outer peripheral surface of the intermediate tube, the second vertical seal protrusion portion extending in the axial direction and pressed against the inner peripheral surface of the outer tube may be provided at a portion which is sandwiched in the axial direction by the inner seal protrusion portion and the orifice passage and located on the side opposite to the first vertical seal protrusion portion sandwiching the recessed portion in the circumferential direction, and the second vertical seal protrusion portion may extend from the inner seal protrusion portion toward the orifice passage side along the axial direction.

In this case, the second vertical seal protrusion portion is provided at a portion located on the side opposite to the first vertical seal protrusion portion which sandwiches the recessed portion in the circumferential direction on the outer peripheral surface of the intermediate tube and is connected to the inner seal protrusion portion. Accordingly, it is possible to secure rigidity of the portion of the inner seal protrusion portion which is located between the first vertical seal protrusion portion and the second vertical seal protrusion portion and faces the recessed portion in the axial direction, and it is possible to prevent the liquid in the orifice passage from leaking toward the recessed portion side.

Since the second vertical seal protrusion portion extends from the inner seal protrusion portion toward the orifice passage side along the axial direction, it is possible to prevent the flow of the liquid leaked from the liquid chamber toward the recessed portion from being obstructed by the second vertical seal protrusion portion.

The concave portion which is recessed inward in the radial direction and of which at least a part has the same position in the circumferential direction as that of the recessed portion may be provided between the main seal protrusion portion and the outer seal protrusion portion that are adjacent to each other in the axial direction.

In this case, since the concave portion is provided between the main seal protrusion portion and the outer seal protrusion portion adjacent to each other in the axial direction, the liquid which is leaked from the liquid chamber and introduced between the main seal protrusion portion and the outer seal protrusion portion adjacent to each other in the axial direction through the recessed portion can be entered into the concave portion, and the liquid can be prevented from leaking to the outside of the liquid sealing bush.

The width of the first vertical seal protrusion portion may be wider than the width of the outer seal protrusion portion.

In this case, since the width of the first vertical seal protrusion portion is wider than the width of the outer seal protrusion portion, the flow of the liquid leaking from one liquid chamber to the other liquid chamber without entering into the recessed portion can be reliably blocked, and the liquid can be introduced into the recessed portion.

A technical scope of the present invention is not limited to the above-described embodiments, and various modifications can be made without departing from the scope of the present invention.

For example, in the above-described embodiment, the main seal protrusion portion 23 collapses inward in the axial direction, but the main seal protrusion portion 23 may collapse outward in the axial direction as appropriate.

The annular protrusion portion 21, the coated rubber 26, the inner seal protrusion portion 27, the first vertical seal protrusion portion 28, the second vertical seal protrusion portion 29, the positioning protrusion portion 25, the end seal protrusion portion 19, the concave portion 18, and the vertical hole 31 may not be provided.

The liquid sealing bush 1 may be applied to a torsion beam type rear suspension, a vehicle engine mount, a generator mount mounted on a construction machine, a machine mount installed in a factory or the like, and the like.

The annular protrusion portion 21, the outer seal protrusion portion 22, the main seal protrusion portion 23, the recessed portion 24, the coated rubber 26, the inner seal protrusion portion 27, the first vertical seal protrusion portion 28, the second vertical seal protrusion portion 29, the end seal protrusion portion 19, the concave portion 18, and the vertical hole 31 may not be provided.

The annular protrusion portion 21, the coated rubber 26, the inner seal protrusion portion 27, the second vertical seal protrusion portion 29, the positioning protrusion portion 25, the end seal protrusion portion 19, the concave portion 18, and the vertical hole 31 may not be provided.

In addition, it is possible to replace the components in the above-described embodiments with well-known components as appropriate without departing from the scope of the present invention, and the above-described embodiments and modifications may be appropriately combined.

### [Industrial Applicability]

According to a liquid sealing bush according to the present invention, it is possible to prevent air from remaining and being contained in a liquid when the liquid is injected into two liquid chambers and an orifice passage.

### [Reference Signs List]

- 1:: liquid sealing bush
- 11:: outer tube
- 12:: inner tube
- 13:: intermediate tube
- 14:: elastic body
- 15:: liquid chamber
- 16:: orifice passage
- 18:: concave portion
- 19:: end seal protrusion portion
- 22:: outer seal protrusion portion
- 23:: main seal protrusion portion
- 24:: recessed portion
- 25:: positioning protrusion portion
- 26:: coated rubber
- 27:: inner seal protrusion portion
- 28:: first vertical seal protrusion portion (vertical seal protrusion portion)
- 29:: second vertical seal protrusion portion
- 32:: protrusion portion row
- O:: common axis (central axis)

## Claims

1. A liquid sealing bush comprising:
an outer tube attached to any one of a vibration generating portion and a vibration receiving portion;
an inner tube attached to the other of the vibration generating portion and the vibration receiving portion and provided inside the outer tube;
an intermediate tube provided between the outer tube and the inner tube; and
an elastic body configured to connect an outer peripheral surface of the inner tube and an inner peripheral surface of the intermediate tube,
wherein two liquid chambers and an orifice passage configured to allow the liquid chambers to communicate with each other are provided inside the outer tube,
in an outer peripheral surface of the intermediate tube, a main seal protrusion portion extending over an entire length in a circumferential direction and pressed against an inner peripheral surface of the outer tube is separately provided at each position sandwiching the liquid chamber and the orifice passage from both sides in an axial direction along a central axis of the liquid sealing bush,
in the outer peripheral surface of the intermediate tube, an outer seal protrusion portion extending over the entire length in the circumferential direction and pressed against the inner peripheral surface of the outer tube is separately provided at each position sandwiched between two main seal protrusion portions in the axial direction and sandwiching the liquid chamber and the orifice passage from both sides in the axial direction, and
in at least one of two outer seal protrusion portions, a recessed portion recessed inward in a radial direction and penetrating in the axial direction is formed in a portion separated from the liquid chamber in the circumferential direction.

2. The liquid sealing bush according to Claim 1,
wherein in the outer peripheral surface of the intermediate tube, an inner seal protrusion portion extending in the circumferential direction and pressed against the inner peripheral surface of the outer tube is separately provided at each position adjacent to the liquid chamber in the circumferential direction and sandwiching the orifice passage from both sides in the axial direction.

3. The liquid sealing bush according to Claim 1 or 2,
wherein in the outer peripheral surface of the intermediate tube, a first vertical seal protrusion portion extending in the axial direction and pressed against the inner peripheral surface of the outer tube is provided at each position adjacent to the liquid chamber in the circumferential direction and sandwiching the orifice passage from both sides in the axial direction.

4. The liquid sealing bush according to any one of Claims 1 to 3,
wherein a concave portion recessed inward in the radial direction and including at least a part having the same position in the circumferential direction as that of the recessed portion is provided between the main seal protrusion portion and the outer seal protrusion portion adjacent to each other in the axial direction.

5. The liquid sealing bush according to any one of Claims 1 to 4,
wherein the main seal protrusion portion is formed in a flange shape extending toward the outer seal protrusion portion side along the axial direction outward in the radial direction.

6. The liquid sealing bush according to any one of Claims 1 to 5,
wherein in the outer peripheral surface of the intermediate tube, an end seal protrusion portion extending over the entire length in the circumferential direction and pressed against the inner peripheral surface of the outer tube is provided at a portion located on a side opposite to the outer seal protrusion portion along the axial direction from the main seal protrusion portion.

7. The liquid sealing bush according to Claim 1,
wherein in the outer peripheral surface of the intermediate tube, a plurality of positioning protrusion portions extending in the axial direction and pressed against the inner peripheral surface of the outer tube are provided at intervals in the circumferential direction at both end portions in the axial direction located on an outside in the axial direction along the central axis of the liquid sealing bush from the liquid chamber and the orifice passage.

8. The liquid sealing bush according to Claim 7,
wherein a plurality of protrusion portion rows in which the plurality of positioning protrusion portions are provided at intervals in the circumferential direction are provided at intervals in the axial direction at both end portions in the axial direction on the outer peripheral surface of the intermediate tube.

9. The liquid sealing bush according to Claim 8,
wherein the main seal protrusion portion is provided at both end portions on the outer peripheral surface of the intermediate tube in the axial direction, and
the protrusion portion rows are provided on both sides in the axial direction with respect to the main seal protrusion portion.

10. The liquid sealing bush according to Claim 9,
wherein the positioning protrusion portions of the protrusion portion row located outside the main seal protrusion portion in the axial direction extends outward in the axial direction from the main seal protrusion portion.

11. The liquid sealing bush according to any one of Claims 8 to 10,
wherein a coated rubber is provided on the outer peripheral surface of the intermediate tube,
the plurality of protrusion portion rows are integrally formed with the coated rubber, and
in the plurality of protrusion portion rows located at the same axial end portion on the outer peripheral surface of the intermediate tube, a width of the positioning protrusion portion of the protrusion portion row located on an inside in the axial direction is equal to or larger than a width of the positioning protrusion portion of the protrusion portion row located outside in the axial direction.

12. The liquid sealing bush according to any one of Claims 7 to 11,
wherein in the outer peripheral surface of the intermediate tube, a first vertical seal protrusion portion extending in the axial direction and pressed against the inner peripheral surface of the outer tube is provided at each position adjacent to the liquid chamber in the circumferential direction and sandwiching the orifice passage from both sides in the axial direction,
the first vertical seal protrusion portion is axially connected to a positioning protrusion portion having a largest width among the plurality of positioning protrusion portions, and
a width of the positioning protrusion portion is equal to a width of the first vertical seal protrusion portion.

13. The liquid sealing bush according to Claim 1,
wherein in the outer peripheral surface of the intermediate tube, a first vertical seal protrusion portion extending toward an orifice passage side along the axial direction from the outer seal protrusion portion and pressed against the inner peripheral surface of the outer tube is provided at a portion axially sandwiched by the outer seal protrusion portion and the orifice passage and avoiding the recessed portion.

14. The liquid sealing bush according to Claim 13,
wherein in the outer peripheral surface of the intermediate tube, an inner seal protrusion portion extending in the circumferential direction and pressed against the inner peripheral surface of the outer tube is separately provided at each position adjacent to the liquid chamber in the circumferential direction and sandwiching the orifice passage from both sides in the axial direction, and
the inner seal protrusion portion extends from the first vertical seal protrusion portion toward a side where the recessed portion is located with respect to the first vertical seal protrusion portion in the circumferential direction.

15. The liquid sealing bush according to Claim 14,
wherein the inner seal protrusion portion extends in the circumferential direction from the axial intermediate portion of the first vertical seal protrusion portion,
in the outer peripheral surface of the intermediate tube, a second vertical seal protrusion portion extending in the axial direction and pressed against the inner peripheral surface of the outer tube is provided at a portion which is sandwiched in the axial direction by the inner seal protrusion portion and the orifice passage and located on a side opposite to the first vertical seal protrusion portion sandwiching the recessed portion in the circumferential direction, and
the second vertical seal protrusion portion extends from the inner seal protrusion portion toward the orifice passage side along the axial direction.

16. The liquid sealing bush according to any one of Claims 13 to 15,
wherein a concave portion recessed inward in the radial direction and including at least a part having the same position in the circumferential direction as that of the recessed portion is provided between the main seal protrusion portion and the outer seal protrusion portion adjacent to each other in the axial direction.

17. The liquid sealing bush according to any one of Claims 13 to 16,
wherein a width of the first vertical seal protrusion portion is wider than a width of the outer seal protrusion portion.
